# EUROPÄISCHE PATENTANMELDUNG

(11) **EP 3 620 438 A1**
(43) Veröffentlichungstag der Anmeldung: **11.03.2020**
(21) Anmeldenummer: 18193407.6
(22) Anmeldetag: 10.09.2018
(51) Int. Cl.: C02F 1/467, C02F 1/461, C25B 3/02, C25B 3/04, C02F 101/30

(54) **VORRICHTUNG UND VERFAHREN ZUR REINIGUNG VON ABWASSER**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es wird eine Reinigungsvorrichtung (1) und ein Verfahren für die Reinigung von Abwasser (2) aus einem Tank (3) und/oder einer Sammeleinrichtung (3a) beschrieben. Die Reinigungsvorrichtung weist mindestens eine Elektrolysezelle auf, die wenigstens umfasst einen Elektrodenraum (5) mit einer Anode (6), geeignet zur Erzeugung von Hydroxid-Radikalen, und einer Kathode (7) geeignet zur Reduktion von Sauerstoff, die als Gasdiffusionselektrode ausgebildet ist, eine Abwasser-Zuleitung (8) und eine Abwasser-Ableitung (9) für das gereinigte Abwasser (10), weiter umfassend einen Gasraum (11), der durch die Kathode (7) vom Elektrodenraum (5) getrennt ist, mindestens eine Zuleitung (12) und eine Ableitung (13) für ein sauerstoffhaltiges Gas, die mit dem Gasraum (11) verbunden sind, und elektrische Anschlüsse (19a) und (19b), die die Anode und die Kathode mit einer Gleichspannungsquelle (19) schaltbar verbinden.

## Beschreibung

Die Erfindung betrifft eine Vorrichtung und ein Verfahren zur Reinigung von Abwasser unter Nutzung von elektrochemisch erzeugten Hydroxid-Radikalen und einer Gasdiffusionselektrode als Kathode.

Besonders die dezentrale Abwasserreinigung gewinnt eine immer größere Bedeutung. Ebenfalls sollten bei einer dezentralen Reinigung sowohl keine zusätzlichen Hilfsstoffe eingesetzt werden müssen, als auch keine weiteren zu entsorgenden Abfallstoffe anfallen.

Dezentrale Abwasserreinigung stellt damit eine hohe Herausforderung dar. Die nach dem Stand der Technik bekannten Reinigungsverfahren weisen eine Reihe von Nachteilen auf, die im Folgenden dargelegt werden.

Die Entfernung von organischen Verunreinigungen aus industriellem Abwasser kann stationär nach dem Stand der Technik durch Strippen mit Wasserdampf in Kolonnen und nachfolgende Behandlung des Abwassers mit Aktivkohle erfolgen. Für dezentrale Anwendungen ist dies kaum durchführbar, da entsprechende Kolonnen nicht verfügbar bzw. im mobilen Einsatz nicht handhabbar sind. Weiterhin muss bei Einsatz von Aktivkohle die mit den Verunreinigungen beladene Aktivkohle entsorgt bzw. recycelt werden. Allgemein kann festgestellt werden, dass die nach dem Stand der Technik bekannten dezentralen Reinigungsverfahren zur Reinigung von organische Verbindungen enthaltenden Abwässern durch Verwendung von Adsorbermaterial wie z.B. Aktivkohle den Nachteil haben, dass die Aktivkohle regelmäßig ausgetauscht und aufgearbeitet werden muss. Weiterhin muss der Gehalt an organischen Verunreinigungen im gereinigten Prozesswasser ständig kontrolliert werden, da die Adsorbermaterialien eine begrenzte Aufnahmekapazität haben, was einen weiteren technischen Aufwand bedeutet.

Ein weiteres grundsätzlich bekanntes Verfahren zur Behandlung von industriellem Prozesswasser oder Abwasser ist die Behandlung des Abwassers mit Ozon. Die Abwasserbehandlung mit Ozon ist aufwändig, da Ozon aus Sauerstoff hergestellt werden muss, der als zusätzliche Komponente bereitgestellt werden muss. Die schlechte Ausbeute bei der Ozonherstellung, typischerweise durchgeführt mittels eines Ozonisators und die Vernichtung von etwaig überschüssigem Ozon erfordern einen zusätzlichen Apparat zur Nachbehandlung des Prozesswassers und der Abluft während des Reinigungsverfahrens, um eine Freisetzung von giftigem Ozon zu vermeiden.

Die Abwasserreinigung für z.B. die mobile Anwendung stellt aus den vorgenannten Nachteilen eine besonders hohe Anforderung an ein neues Reinigungsverfahren dar. Zu den mobilen Anwendungen zählen z.B. die Reinigung von Toilettenabwässern in Fahrzeugen wie Reisemobilen oder Schiffstoiletten in Yachten, oder für Anwendungen im Bereich der Landwirtschaft, bei denen Abwässer anfallen, die z.B. Pflanzenschutzmittel enthalten, welche bei der Reinigung von Geräten zu deren Verteilung entstehen.

Die dezentrale Abwasserreinigung ist auch z.B. sinnvoll für die Behandlung von Krankenhausabwasser oder Abwasser aus Alten- und Pflegeheimen, die außer den normalen Abfallstoffen (wie Harnstoff, Eiweiß, Glucose, Huminsäuren), vielfach auch Medikamentenreste oder Metabolite von Antibiotika, Hormonen oder anderen schwer abbaubaren Verbindungen wie Schmerzmitteln, Zytostatika oder Röntgenkontrastmitteln enthalten.

Eine elektrochemische Abwasserbehandlung würde eine praktikable Methode zur dezentralen Abwasserbehandlung darstellen. Hierbei könnten mit Bor dotierte Diamantelektroden (BDD) oder anderen Elektroden zum Einsatz kommen, die eine hohe Oxidationskraft aufweisen. Beispielsweise könnten mit Bleidioxid beschichtete Anoden (CN 000104404566) eingesetzt werden.

Bei der Verwendung solcher Elektroden zur Abwasserbehandlung entsteht jedoch an der Kathode Wasserstoff, der sowohl ein sicherheitstechnisches Problem darstellt, als auch mit oberflächenaktiven Substanzen im Abwasser, wie z.B. Eiweißstoffen, Schaum bildet. Dieser Schaum füllt den Abwasserbehälter und quillt auch aus diesem heraus. Weiterhin füllt sich auch die Elektrolysezelle mit Schaum, wodurch der Elektrolyseprozess behindert wird. Weiterhin können sich mit Wasserstoff gefüllte Schaumbläschen bilden, die aus dem Elektrolyseur ausgetragen werden können und ein großes Sicherheitsrisiko darstellen.

Es wurde nach einer technischen Lösung und einer Reinigungsvorrichtung gesucht, die eine elektrochemische Abwasserbehandlung ermöglicht, bei der die Wasserstoffentwicklung an der Kathode vermieden wird und insbesondere ein weiteres Oxidationsmittel erzeugt wird. Ferner soll die Reinigung von Abwässern ohne Schaumbildung, bedingt durch den kathodisch erzeugten Wasserstoff, durchgeführt werden können.

Aufgabe der Erfindung ist die Entfernung von organischen Verunreinigungen aus Abwasser, die auf einfachere Art, z.B. ohne Verwendung von Absorptionsmitteln, zum Beispiel Aktivkohle, oder durch andere aufwendige Reinigungsverfahren wie oben dargestellt durchgeführt werden kann.

Besondere Aufgabe der Erfindung ist die Reinigung solcher Lösungen, die einen Gesamtgehalt von organischen Verbindungen (TOC = total organic content) von bis zu 10 g/kg Abwasser und mehr haben.

Weiterhin ist insbesondere für dezentrale und auch für mobile Anwendungen eine kompakte und effiziente Abwasserreinigungseinheit besonders wünschenswert, die ohne weitere Hilfsstoffe (z.B. Desinfektionsmittel, Chlorkalk, Adsorbentien) auskommt und bei deren Anwendung auch keine weiteren zu entsorgenden Nebenprodukte entstehen.

Gegenstand der Erfindung ist eine Reinigungsvorrichtung für die Reinigung von Abwasser aus einer Abwasserquelle aus einem Tank und/oder einer Sammeleinrichtung mindestens aufweisend eine Elektrolysezelle wenigstens umfassend einen Elektrodenraum mit einer Anode, geeignet zur Erzeugung von Hydroxid-Radikalen, und einer Kathode geeignet zur Reduktion von Sauerstoff, die als Gasdiffusionselektrode ausgebildet ist, eine, insbesondere absperrbare, Abwasser-Zuleitung und eine, insbesondere absperrbare, Ableitung für das gereinigte Abwasser, weiter umfassend einen Gasraum, der durch die Kathode vom Elektrodenraum getrennt ist, mindestens eine Zuleitung und eine Ableitung für ein sauerstoffhaltiges Gas, die mit dem Gasraum verbunden sind, und elektrische Anschlüsse, die die Anode und die Kathode mit einer Gleichspannungsquelle schaltbar verbinden.

Ggf. gebildetes Kondensat im Gasraum wird über eine optionale Kondensatableitung abgeführt, die mit der Zulaufleitung zum Elektrodenraum verbunden.

In einer bevorzugten Ausführungsform ist der Elektrodenraum mit einem zusätzlichen Auslass für Gase aus dem Elektrodenraum versehen. Der Gasauslass ist bevorzugt mit einer Gasreinigungsanlage verbunden. Die Gasreinigung kann z.B. durch eine Aktivkohle-Reinigung erfolgen. Hierfür wird allerdings nur ein Bruchteil von Aktivkohle benötigt gegenüber der grundsätzlichen bekannten adsorptiven Reinigung des verunreinigten Abwassers.

Die Anode weist bevorzugt eine Beschichtung mit Diamant, insbesondere eine Beschichtung aus mit Bordotiertem Diamant (BBD) auf.

Deren Vorteil ist, dass die Verunreinigungen im Abwasser vollständig mineralisiert werden können, d.h. zu Kohlendioxid abgebaut werden können. Bei Einsatz einer BDD Anode werden OH-Radikale erzeugt, die organische Verunreinigungen vollständig zu Kohlendioxid abbauen. Hierdurch entstehen keine weiteren Stoffe, die einer Entsorgung oder Aufbereitung zugeführt werden müssen.

Der Einsatz von BDD Elektroden in der Abwasserreinigung ist grundsätzlich bekannt und wird beispielsweise beschrieben unter http://archiv.aktuelle-wochenschau.de/2006/woche8b/woche8b.html.

Gasdiffusionselektroden, die Sauerstoff zu Hydroxidionen oder Wasserstoffperoxid reduzieren sind ebenfalls grundsätzlich bekannt (EP 1673818B1, EP 1327011B1)

Für Abwasseranwendungen sollte die Elektrode eine sehr gute elektrische Leitfähigkeit aufweisen, da die Abwässer meist nur schlecht leitfähig sind. Eine gute Leitfähigkeit erniedrigt den Elektrolysespannung und damit den Energieverbrauch des Reinigungsverfahrens.

Weiterhin benötigen die Elektroden eine hohe mechanische Stabilität, da im Abwasser auch Partikel vorhanden sein können, die die Elektrode mechanisch, d.h. abrasiv angreifen und deren Lebensdauer und Funktionstüchtigkeit beschränken können.

Die Anode und/oder die Kathode ist daher in einer bevorzugten Ausführungsform als Flächengebilde ausgeführt, insbesondere als ein mit einem Elektrokatalysator beschichtetes Blech, Streckmetall oder Metallnetz ausgeführt.

Es war bisher nicht bekannt, ob die aus dem Stand der Technik grundsätzlich bekannten Elektroden, die eigentlich für den Betrieb in der Elektrolyse in Gegenwart von Alkalilösungen entwickelt wurden, auch in Abwasserlösungen funktionieren. Abwasser unterscheidet sich von Alkalilösungen durch seine extrem schlechte elektrische Leitfähigkeit als auch durch den pH-Wert und die verschiedenen unterschiedlichen organischen Verbindungen, die das Abwasser enthält. Durch die organischen Verbindungen verändert sich das Benetzungsverhalten der Elektroden, was den Betrieb und die Funktionstüchtigkeit stark negativ beeinflussen kann. Weiterhin sollte insbesondere ein Fouling der Elektrode verhindert werden können. Unter Fouling versteht man dabei die Belegung der Oberfläche mit organischen oder anorganischen Ablagerungen. So sind in den meisten Abwässern Erdalkalimetallionen vorhanden. Durch den pH-Anstieg an der Kathode bei der Abwasserreinigung können an der Kathode an die Erdalkalihydroxide oder auch bei Vorhandensein von Carbonaten die Erdalkalicarbonate ausgefällt werden, die die Oberfläche der Elektrode verblocken, so dass eine weitere Elektrolyse behindert oder unmöglich wird. Ein Ausbau der Kathode und deren Reinigung oder Ersatz ist notwendig und führt zu hohem Wartungsaufwand und verschlechtert die Wirtschaftlichkeit des Reinigungsverfahrens.

Besondere Aufgabe der Erfindung ist es daher eine Vorrichtung und ein Verfahren bereitzustellen, das das vorgenannte Blockieren der Elektrode vermeidet oder auf einfache Art beseitigt.

Dies kann durch die nachfolgend beschriebene Umpolung, d.h. durch den bifunktionalen Betrieb der Elektroden unter den weiter angegebenen Bedingungen erreicht werden.

Die bekannten Gasdiffusionselektroden für die Sauerstoffreduktion im Alkalischen, die auf Silber als Elektrokatalysator basieren, sind für einen bifunktionellen Einsatz leider ungeeignet, da die Elektroden zwar gut Sauerstoff reduzieren können, jedoch für die Sauerstoffentwicklung ungeeignet sind. So würde sich der für die Sauerstoffreduktion gut geeignete auf Silber basierende Katalysator unter den Bedingungen der Sauerstoffentwicklung auflösen und die Elektrode zerstört werden.

Dies bedeutet also, dass für diese besondere Betriebsweise nur ausgewählte Arten von Elektroden in Frage kommen.

In einer besonders bevorzugten Variante der Erfindung ist die Kathode eine bifunktionelle Kathode , die geeignet ist für die elektrochemische Sauerstoffreduktion und für die elektrochemische Sauerstoffproduktion, insbesondere eine bifunktionelle Kathode hergestellt auf Basis eines Mischoxids mit Perowskitstruktur mit einer polymeren hydrophilen Komponente, insbesondere einem Fluorpolymer, besonders bevorzugt PTFE und einem Kohlenstoffmaterial ausgewählt aus der Reihe: Kohlenstoff-Nanoröhrchen, Ruß, Graphit, Glaskohlenstoff.

Unter einem Mischoxid mit Perowskitstruktur wird insbesondere ein Mischoxid von einem oder mehreren Erdalkalimetallen aus der Reihe; Kalzium, Strontium, Barium, bevorzugt Strontium, Barium, mit wenigstens einem Metall aus der Reihe: Lanthan, Mangan, Kobalt und Eisen, bevorzugt Lanthan und Mangan verstanden, wobei das Mischoxid die Kristallstruktur von Perowskit aufweist.

Besonders bevorzugt ist ein Mischoxid aus Lanthan, Mangan und Strontium mit Perowskitstruktur.

Bevorzugt ist die Zuleitung des Abwassers am Elektrodenraum unterhalb der Kathode oder seitlich zu der Kathode im unteren Drittel des Elektrodenraums angebracht.

Eine bevorzugte Variante der neuen Reinigungsvorrichtung ist dadurch gekennzeichnet, dass der Abstand zwischen Anode und Kathode im Bereich von 1-10 mm beträgt. Ist der Spalt weniger als 1 mm breit kann der Durchgang zwischen Anode und Kathode durch Schwebstoffe blockiert werden. Oberhalb einer Spaltbreite von 10 mm steigt die Betriebsspannung für den Betrieb des Elektrolyseurs merklich an, sodass der Elektrolyseur zu viel elektrische Energie benötigt.

Die Kathode ist bevorzugt als Gasdiffusionselektrode ausgebildet und besteht mindestens aus einem Träger und einer elektrochemisch aktiven Schicht und einer Gasdiffusionsschicht. Die elektrochemisch aktive Schicht und die Gasdiffusionsschicht bilden in einer besonders bevorzugten Ausführung eine Einheit.

In einer weiteren bevorzugten Ausführung der Erfindung ist die Kathode eine für die Wasserstoffperoxid-Herstellung geeignete auf Kohlenstoffmaterial basierende Gasdiffusionselektrode, insbesondere mit mindestens einem Kohlenstoffmaterial, das ausgewählt ist aus der Reihe: Kohlenstoff-Nanoröhrchen, Ruß, Graphit, Glaskohlenstoff.

Weiter bevorzugt ist ein neues Reinigungsvorrichtung, das dadurch gekennzeichnet ist, dass die Kathode feinkörniges Kohlenstoffmaterial, insbesondere mit einem mittleren Korndurchmesser von 1 bis 60 Mikrometer umfasst und in Mischung mit einer polymeren hydrophilen Komponente, insbesondere einem Fluorpolymer, besonders bevorzugt mit PTFE, vorliegt und auf einem mechanischen stabilen, vorzugsweise elektrisch leitendenden Träger aufgebracht ist. Bevorzugt ist auch die polymere hydrophile Komponente, insbesondere das Fluorpolymer, besonders bevorzugt das PTFE das zur Herstellung der Kathode verwendet wird feinkörnig, d.h. es weist einen mittleren Teilchendurchmesser im Bereich von 100 bis 1000 Mikrometer, bevorzugt 250 bis 700 Mikrometer auf.

Das Material des Trägers ist insbesondere ausgewählt aus der Reihe: Nickel, vergoldetes Nickel, Silber, PTFE beschichtete Glasfaser, Kunststoffgewebe bestehend besonders bevorzugt aus Polypropylen oder Polyäthylen oder Kohlenstofffasern. Bevorzugt sind Kohlenstofffasern oder vergoldetes Nickel.

In einem bevorzugten Reinigungssystem umfasst die Kathode einen Elektro-Katalysator zur Sauerstoffreduktion zur Bildung von Hydroxid-Ionen.

In einer besonders bevorzugten Ausführungsform umfasst die Kathode einen Elektro-Katalysator oder Mischkatalysator, der außer zur Bildung von Hydroxid-Ionen auch zur Reduktion von Sauerstoff zu Wasserstoffperoxid geeignet ist.

In einer bevorzugten Variante der neuen Reinigungsvorrichtung umfasst die Kathode einen bifunktionalen Katalysator, der sowohl die Sauerstoff-Reduktion (ORR oxygen reduction reaction) als auch die Sauerstoff-Oxidation (OEE oxygen evolution reaction) katalysiert. Ebenfalls können Mischungen von zwei verschiedenen Katalysatoren, die jeweils eine der genannten Reaktionsarten ermöglichen, eingesetzt werden.

In einer weiteren bevorzugten Ausführungsform der neuen Reinigungsvorrichtung verbindet die Abwasserzuleitung die Elektrolysezelle mit einem Abwassertank und/oder einer Abwassersammeleinrichtung.

In einer weiteren bevorzugten Ausführungsform der neuen Reinigungsvorrichtung ist die Elektrolysezelle über eine Abwasser-Ableitung mit einem Tank für die Aufnahme von gereinigtem Wasser verbunden. Prinzipiell besteht die Möglichkeit, das gereinigte Abwasser aus dem Tank einer Entsorgung bzw. Wiederverwendung als Brauchwasser zuzuführen.

In einer weiteren bevorzugten Ausführungsform der Erfindung weist die Reinigungsvorrichtung eine absperrbare Kreislauf-Leitung auf, die insbesondere mit der Leitung für gereinigtes Wasser und der Abwasserzuleitung, ggf. über die Elektrolytvorlage verbunden ist.

Weiterhin bevorzugt wird Abwasser gereinigt, welches entweder aus einer Abwasserquelle zugeführt wird oder das Abwasser wird aus einem Sammelbehälter über eine Pumpe zugeführt. Mit einer Zirkulationspumpe wird in einer bevorzugten Ausführung das Abwasser aus der Elektrolysevorlage durch die Zelle und zurück gepumpt.

Aus dem Sammelbehälter kann batch-weise der Tank gefüllt werden. Wenn das Abwasser aus dem Tank gereinigt und über die Leitung abgegeben wurde, kann erneut der Tank aus dem Sammelbehälter gefüllt werden.

In einer anderen bevorzugten Variante der neuen Reinigungsvorrichtung sind die Anode und die Kathode umpolbar mit einer Gleichspannungsquelle elektrisch verbunden.

Als Gleichspannungsquelle kommen alle grundsätzlich bekannten Gleichspannungserzeuger, wie Gleichrichter, Batterien, Akkumulatoren in Frage. Bevorzugt werden für den mobilen Betrieb Akkumulatoren eingesetzt, die bevorzugt über Photovoltaikzellen mit Strom bespeist werden.

Weiter bevorzugt ist eine neue Reinigungsvorrichtung mit wenigstens einer Überwachungseinheit zur Überwachung einer oder mehrere der Messgrößen aus der Reihe: Elektrolyse-Strom, Elektrolysespannung, Füllstand der Tanks für das Abwasser und das gereinigte Abwasser, Volumenstrom des Abwassers, pH-Wert des Abwassers und Reinigungsgrad des Abwasser im Kreislauf durch die Zelle und gereinigten Abwassers versehen ist.

Sollte an der Kathode unerwünschter Weise Wasserstoff in einer Nebenreaktion gebildet werden, so kann als sicherheitstechnische Maßnahme eine Inertisierung erfolgen, um eine Knallgasbildung zu vermeiden. Hierzu kann mit einem Inertgas die Wasserstoff-Menge unter die Explosionsgrenze-Grenze verdünnt werden. Zur Inertisierung kann auch ein entsprechender Überschuss an Luft eingesetzt werden. Hierzu wird beispielsweise in den Tank ein Inertgas zugeführt.

Viele Abwässer enthalten Chlorid als Anionen. Diese würde an der Anode zu Chlor oxidiert werden und dann mit im Abwasser enthaltenen organischen Verbindungen zu chlorierten Verbindungen weiter reagieren. Zur Vermeidung kann, wie in der WO2018/029200 beschrieben, der pH Wert auf einem pH größer als 9,5 gehalten werden. Entsprechende Mengen an Alkali-Lauge z.B. in Form von Natronlauge oder Kalilauge können über die Zuleitung dosiert werden. In einem solchen Fall ist vor Abgabe des gereinigten Abwassers das Abwasser zu neutralisieren, bevorzugt mit einer Mineralsäure, besonders bevorzugt mit Salzsäure oder Schwefelsäure.

Insbesondere wird der Reinigungsgrad mithilfe eines Detektors zur Bestimmung des Gesamtgehaltes an organischen Verbindungen (TOC total organic content) überwacht, insbesondere bevorzugt mithilfe eines optischen oder IR Detektors.

Weiterer Gegenstand der Erfindung ist ein Verfahren zur elektrochemischen Reinigung von mit organischen Stoffen und gegebenenfalls zusätzlich mit anorganischen Stoffen verunreinigtem Abwasser unter Verwendung einer neuen Reinigungsvorrichtung wie in dieser Anmeldung beschrieben, das dadurch gekennzeichnet ist, dass Abwasser aus einem Tank und/oder einer Sammeleinrichtung über die Abwasser-Zuleitung in den Elektrodenraum der Elektrolysezelle kontinuierlich oder diskontinuierlich, bevorzugt kontinuierlich, eingeleitet wird, durch Anlegen einer elektrischen Spannung zwischen Anode und Kathode zur Erzeugung von Hydroxidionen oder Wasserstoffperoxid an der Kathode und Hydroxid-Radikalen an der Anode behandelt und gereinigt wird und nach ausreichender Reinigung über die Ableitung abgeleitet wird.

Je nach Standort einer Abwasserreinigungsanlage müssen ortgegebene Reinigungsgrade erzielt werden, bevor das gereinigte Abwasser zur Entsorgung abgegeben wird.

In einer bevorzugten Variante des neuen Verfahrens wird Abwasser in den Elektrodenraum ein oder mehrfach rezirkuliert. Besonders bevorzugt wird das gereinigte Abwasser bis zur Erreichung eines vorbestimmten Reinigungsgrades rezirkuliert und insbesondere bevorzugt in einem geschlossenen Kreislauf rezirkuliert.

Das Verfahren wird insbesondere bevorzugt so durchgeführt, dass das Abwasser den Elektrodenraum in turbulenter Strömung (insbesondere mit einer Reynold-Zahl > 2300) durchströmt.

Die mittlere Verweilzeit des Abwassers im Elektrodenraum beträgt bevorzugt typischerweise 0,1 bis 15 Sekunden.

In einer weiteren bevorzugten Ausführung des neuen Verfahrens werden die Anode und Kathode beim Betrieb der Elektrolysezelle in Intervallen elektrisch umgepolt, um zwischen Sauerstoffreduktionsmodus und Sauerstoffentwicklungsmodus an der Kathode umzustellen. Die Anode wechselt dann zwischen der Herstellung von Hydroxid-Ionen zur Wasserstoff-Herstellung. Besonders für diesen Fall, wenn sich die Gasdiffusionselektrode im ORR Modus und die BBD Elektrode im OEE Modus ist eine Inertisierung zur Vermeidung der Bildung von explosionsfähigen Gasmischungen notwendig. Das Intervall wird vorzugsweise so gewählt, dass mit einem kurzzeitigen Betrieb im Sauerstoffentwicklungsmodus die möglichen Ablagerungen an der Elektrode entfernt werden können.

Die Intervallzeit für den Betrieb der Kathode im Sauerstoffreduktionsmodus (ORR) wird dabei in Abhängigkeit von der geflossenen Ladungsmenge je Liter zu reinigendem Abwasser eingestellt. So beträgt die Ladungsmenge im Sauerstoffreduktionsmodus (ORR) zwischen 10 und 120 Ah/L und im Sauerstoffentwicklungsmodus (OEE) 0,01 bis 10 Ah/L (Ah steht für die Ladung in Amperestunden).

Die Elektrodenflächen und Stromdichten im Betrieb sind so zu wählen, dass diese im ORR Modus 100 bis 6000 A/m² beträgt und im OEE Modus 50 bis 4000 A/m² beträgt.

In einer besonderen Ausführung des neuen Verfahrens wird je Milligramm organische Verunreinigung bestimmt als TOC eine Ladungsmenge von 0,01 Ah / mg TOC bis 5 Ah / mg TOC eingebracht.

Das gereinigte Abwasser wird insbesondere zweckmäßigerweise in einen Brauchwassertank geleitet oder einer Abgabeeinheit zugeführt.

Im Falle des Vorliegens von groben Festpartikeln im Abwasser wird in die Abwasserzuleitung oder in die Zuleitung zur Elektrolysezelle zur Zerkleinerung von Festpartikeln vorzugweise eine Zerhackerpumpe zur Förderung des zu reinigenden Abwassers eingesetzt. Ggf. Kann auch die Zirkulationspumpe als Zerhackerpumpe ausgeführt werden.

Zum Austrag von Feststoffen können übliche Verfahren wie Rechen, Schneckenförderer oder Filter eingesetzt werden.

Weiterer Gegenstand der Erfindung ist die Verwendung der neuen oben beschriebenen Reinigungsvorrichtung zur Reinigung von Abwasser in Fahrzeugen, insbesondere in Zügen, Reisebussen und Wohnmobilen, in Flugzeugen und Schiffen, oder insbesondere in mobilen Toiletten.

Weiterhin kann das beschriebene Reinigungssystem als stationäres System verwendet werden zur Behandlung von problematischem Abwasser in landwirtschaftlichen Produktionsstätten, Ferienhäusern, Schwimmbädern, insbesondere aber in Krankenhäusern oder Alten- und Pflegeheimen, bevorzugt zur sicheren Entfernung von Medikamentenresten oder Metaboliten von Hormonen, Schmerzmitteln, Röntgenkontrastmittel, Zytostatika oder Antibiotika aus den Abwässern, bevor diese Abwässer mit kommunalen Abwässern verdünnt werden.

Weiterhin kann die mobile oder stationär verbaute Reinigungsvorrichtung auch zur Reinigung von gesammeltem Abwasser aus Reinigungsvorgängen, die z.B. bei der Spülung/Reinigung von Geräten zur Ausbringung von Pflanzenschutzmitteln anfallen, angewendet werden.

Neben der Anode ist die Kathode von entscheidender Bedeutung für die Durchführung des Reinigungsverfahrens.

Die Kathode wird dabei insbesondere als Gasdiffusionselektrode (GDE) ausgeführt, mit der aus Sauerstoff, Wasser und elektrischer Energie Hydroxid-Ionen und gegebenenfalls zusätzlich Wasserstoffperoxid gebildet werden. Zusammen mit den an der Anode erzeugten OH-Radikalen kann eine besonders hohe Reinigungswirkung erzielt werden. Zusätzlich wird der elektrische Strom sowohl an der Anode als auch an der Kathode zur Herstellung von Oxidantien verwendet, wodurch das Verfahren besonders effizient wird.

In üblichen Abwässern sind Calcium- und Magnesium-Ionen vorhanden. Da der pH-Wert an der Kathode durch die Bildung von Hydroxid-Ionen, die als Nebenprodukt der Sauerstoffreduktion bei Wasserstoffperoxid-Bildung entstehen oder durch die Sauerstoffreduktion entstehen, steigt der pH-Wert an der Kathode. Hierdurch fallen die Erdalkaliionen als Hydroxide oder bei Vorhandensein von Carbonat als Erdalkalicarbonate aus und können die Kathode verblocken.

Zur Vermeidung der Verblockung kann die Elektrolysezelle umgepolt betrieben werden, wodurch die Kathode als Anode geschaltet wird. Dabei werden an der ursprünglichen Kathode Sauerstoff und Protonen entwickelt. Durch die Protonen wird der pH-Wert verkleinert, welches zu einer Auflösung der Erdalkalicarbonate oder -hydroxide führt. Die Sauerstoffentwicklung trägt ebenfalls einen Beitrag zur Ablösung der ausgefallenen Hydroxide und Carbonate bei.

Soll die GDE umgepolt werden, so sollte diese insbesondere einen Katalysator enthalten, der sowohl die Sauerstoffreduktion als auch die Sauerstoffoxidation durchführen kann. Eine umpolbare GDE soll hier auch als bifunktionelle GDE bezeichnet werden.

Bei der Herstellung von Gasdiffusionselektroden, die bifunktionell arbeiten sollen, werden bevorzugt Mischoxide mit Perowskitstruktur mit Kohlenstoffmaterialien und eine Polymerkomponente verarbeitet, wobei vergleichbare Elektroden in Batterieanwendungen beschrieben wurden ("Long-life bifunctional BaSrCoFeO3/C gas diffusion electrode", N. Bogolowski, O. Ngaleu, M. Sakthivel, J.-F. Drillet, Carbon, 119, (2017), 511-518).

Nach dem Stand der Technik werden Nassverfahren zur Herstellung der GDE eingesetzt, bei denen die Komponenten in wässriger Phase dispergiert und verarbeitet werden. Diese Methode stellt eine sehr aufwändige Methode zur Herstellung der GDE dar. Es müssen Dispersionen eingesetzt werden die Additive zur Stabilisierung von PTFE und Katalysatoren enthalten, die nach der Herstellung aufwändig z.B. durch Sinterung wieder entfernt werden müssen wobei dies ggf. auch nicht vollständig gelingt. Trocknung und Sinterung sind mehrfach notwendig. Weiterhin werden Ionomere zugesetzt oder es muss die GDE Oberfläche mit einer Ionomer-Lösung behandelt werden. Gemäß dem vorliegenden erfindungsgemäßen Verfahren können Mischoxide mit Perowskitstruktur mit Kohlenstoffmaterialien in Pulverform ohne Zusatz von Lösungsmittel und Detergenzien sowie Ionomeren verarbeitet werden.

Besonders bevorzugt wird in dem neuen Verfahren und in der neuen Reinigungsvorrichtung eine bifunktionelle GDE eingesetzt, die in Analogie zu dem in der DE 102005023615 A1 offenbarten Trockenverfahren für die Herstellung von silberbasierten GDEs für die Chlor-Alkali-Elektrolyse hergestellt werden.

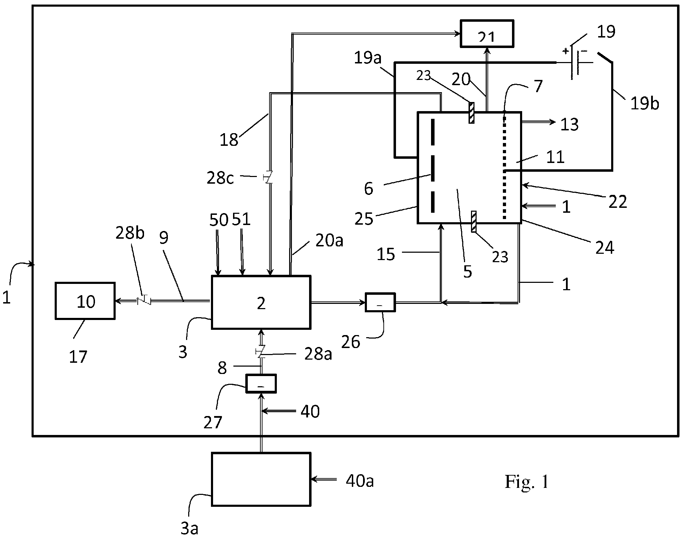

Die Erfindung wird nachstehend anhand der Figur 1 beispielhaft näher erläutert ohne die Erfindung einzuschränken.

Figur 1 zeigt eine schematische Darstellung der neuen Abwasserreinigungsvorrichtung

In der Figur haben die Bezugszeichen die nachstehende Bedeutung:
- 1: Reinigungsvorrichtung
- 2: Abwasser
- 3: Tank Elektrolysevorlage
- 3a: Sammeleinrichtung
- 5: Elektrodenraum
- 6: Anode
- 7: Kathode
- 8: Abwasserzuleitung
- 9: Ableitung für gereinigtes Abwasser
- 10: gereinigtes Abwasser
- 11: Gasraum
- 12: Zuführung 02 haltiges Gas
- 13: Abfuhr 02 haltiges Gas
- 14: Kondensatableitung
- 15: Kreislaufleitung Zuleitung zur Zelle
- 17: Tank für gereinigtes Wasser 10
- 18: Kreislaufleitung Ablauf aus der Zelle
- 19: Gleichspannungsquelle
- 19a: elektrische Zuleitung Anode
- 19b: elektrische Zuleitung Kathode
- 20: Auslass für Gase aus elektrochemischer Zelle
- 20a: Auslass für Gase aus Tank 3
- 21: Gasreinigungsanlage
- 22: elektrochemische Zelle
- 23: Isolatordichtung
- 24: Kathodenhalbschale
- 25: Anodenhalbschale
- 26: Pumpe für Abwasserkreislauf
- 27: Pumpe
- 28a, b, c: Absperrventile
- 40: externer Abwasserzulauf
- 40a: externer Abwasserzulauf
- 50: Gas zum Inertisieren
- 51: Zuleitung von Base ggf. Säure zur pH Einstellung

### Beispiele

### Beispiel 1 Herstellung einer Gasdiffusionselektrode (GDE) zur Verwendung als Kathode

Beispielhaft wird die Gasdiffusionselektrode wie folgt hergestellt:
Eine Mischung bestehend aus PTFE Typ TF 2053Z, mit einem Anteil von 20 Gew.-%, einem Mischoxid mit Perowskitstruktur erhalten aus dem unten beschriebenen Verfahren mit einem Anteil von 60 Gew.-% sowie Kohlenstoff (Leitruß) der Fa. Timcal, Typ C65 mit 15 Gew.-% und Graphit Timcal Type KS 6 mit einem Anteil von 5 Gew.-% wurden bei einer Temperatur im Mittel von 48,5°C mit einer IKA-Mühle in Intervallen von 5 * 20s gemischt. Die Pulvermischung wurde auf 20°C abgekühlt und auf ein Nickel-Drahtnetz mit einer Drahtdicke von 0,14 mm und einer Maschenweite von 0,5 mm aufgestreut, so dass ein Pulverschicht von 4 mm entstand. Die Pulverschicht wurde anschließend mit einer Walze bei einer Linienkraft von 0,65 kN/cm verpresst. Die entstandene Elektrode hatte eine Dicke von 0,68 mm.

Die Herstellung des hierbei eingesetzten Mischoxid mit Perowskitstruktur erfolgte dabei folgendermaßen: Es wurde ein Mischoxid mit Perowskitstruktur der folgenden Zusammensetzung hergestellt: La_{0,9}Sr_{0,1}MnO₃. Zur Herstellung des Perowskits wurde wie folgt vorgegangen: In einem 301 Kessel wurde eine Mischung von Natriumcarbonat, Wasser, Lanthannitrat, Mangannitrat und Strontiumnitrat eingesetzt, die der stöchiometrischen Zusammensetzung des Perowskites entsprach. Der entstandene Niederschlag wurde abgetrennt und auf einer Filterpresse zweimal gewaschen. Zwischen den beiden Filtergängen wurde der Niederschlag mit einem Ultraturrax angemaischt und die Mischung über Nacht stehen gelassen. Im Vakuumtrockenschrank wurde der abgetrennte Feststoff über Nacht bei 90 °C getrocknet. Danach wurde der Feststoff bei 1000 °C für 5 h unter Luftatmosphäre kalziniert. Die BET Oberfläche betrugt 5,7 m²/g. Die Phase wurde per XRD bestätigt.
Grundsätzlich können auch andere Erdalkali-Mischoxide mit Perowskitstruktur z.B. auf Basis von Barium, Strontium, Kobalt und Eisen, besonders bevorzugt ein Mischoxid der Zusammensetzung Ba_{0.5} Sr_{0.5} Co_{0.8} Fe_{0.2} O₃ oder La_{0.6}Ca_{0.4}CoO₃ eingesetzt werden.

Allgemeine Hinweise zu den weiteren Beispielen:
Die Analyse des TOC-Wertes zum Nachhalten des Reinigungseffektes wurde nach DIN EN 1484, Erscheinungsdatum: 1997-08 durchgeführt. Eingesetzt wurde das Gerät vario TOC cube™ der Firma elementar. Die pH-Wert Messung erfolgte mit einer pH-Elektrode FiveEasy™ der Firma Mettler Toledo.

Für die Versuche in den Beispielen wurde wegen der Reproduzierbarkeit ein synthetisch erzeugtes Abwasser eingesetzt. Das Abwasser hatte folgende Zusammensetzung: 10 g/L Harnstoff, 10 mg/L Glucose, 20 mg/L Proteine (Eiweiß). Der pH betrug 4,6. Gesamt TOC Gehalt: 2000 mg/L

### Beispiel 2 (erfindungsgemäß; GDE für H₂O₂ Herstellung)

Die für die Durchführung der Abwasserreinigung verwendete Reinigungsvorrichtung 1 ist schematisch in Figur 1 wiedergegeben. Die Darstellung gibt nicht die tatsächlichen Größenverhältnisse wieder. Die Reinigungsvorrichtung weist als Hauptkomponenten die elektrochemische Zelle 22 einen Vorratstank 3 für das Abwasser 2 und einen Pumpkreislauf 15; 18 für das Abwasser auf. Die elektrochemische Zelle 22 besteht aus einer Anodenhalbschale 25 mit einem Streckmetall aus Niob, welches ein Bor-dotierte Diamatbeschichtung aufwies, als Anode 6, einer Kathodenhalbschale 24 mit einer Gasdiffusionselektrode (GDE) 7 und einem Gasraum 11. Anodenhalbschale und Anode bilden mit der Kathodenhalbschale und dem Raum auf der Flüssigkeitsseite vor der GDE einen gemeinsamen Elektrodenraum 5. Die GDE 7 trennt den gemeinsamen Elektrolytraum 5 von dem Gasraum 11 ab. Etwaiges Kondensat wird über die Leitung 14 aus dem Gasraum 11 abgeführt. Eine Auslassleitung 20 für Gase (im wesentlichen CO₂) verbindet den Elektrodenraum 5 mit einer Gasreinigungsanlage 21 bzw. einem Sammler. Weiterhin wurde über die Leitung 20a Gas aus dem Vorratsbehälter 3 der Gasreinigungsanlage 21 zugeführt. In der Gasreinigungsanlage 21 werden unerwünschte Gasbestandteile entfernt. Der Vorratstank 3 weist noch eine absperrbare Verbindungsleitung zur etwaigen Einleitung von Inertgasen (Leitung 50) auf oder eine absperrbare Verbindungsleitung zur Einleitung von Flüssigkeiten zur pH-Werteinstellung auf (Leitung 51 für Säuren oder Basen). Der Vorratstank 3 ist über eine Abwasserzuleitung 8 und die Zulaufpumpe 27 mit einem externen Abwassertank (Sammelbehälter 3a) mit einem externen Abwasserzulauf 40a oder wahlweise direkt mit einem externen Abwasserzulauf 40 verbunden. Der Vorratstank 3 ist ferner über eine Abwasserableitung 9 mit einem Tank 17 für gereinigtes Wasser 10 verbunden. In den Leitungen 8 und 9 sind jeweils Absperrventile 28a und 28b vorgesehen.

Die Elektrodenflächen von Anode 6 und Kathode 7 betrug im Versuch jeweils 100cm². Der Abstand zwischen Kathode 7 und Anode betrug 5 mm (die Figur 1 stellt nur das Prinzip dar ist somit keine maßhaltige Darstellung). Anodenhalbschale 25 und Kathodenhalbschale 24 sind elektrisch voneinander isoliert (durch den Isolator 23 aus PTFE).

Eingesetzt wurde eine Anode 6 bestehend aus Niob in Form eines Streckmetalls, die eine handelsübliche BDD Beschichtung der Fa. CONDIAS, Diachem®, aufwies. Die Abmessungen der Elektroden 6 und 7 betrugen in der Breite 10cm, in der Tiefe 2mm und in der Höhe 10cm. Die Anode 6 wurde so in die Zelle 22 eingebaut, dass die zu reinigende Lösung 2 an der Anode 6 und der Kathode 7 vorbeiströmt. Der Abstand der Anode 6 zur Rückwand der Anodenhalbschale 25 betrug 2 mm.

Als GDE wurde eine Wasserstoffperoxid-bildende GDE eingesetzt. Diese wurde in Analogie zu dem in der DE 102005023615 A1 beschriebenen Herstellungsverfahren für Gasdiffusionselektroden auf Silberbasis zur Chlor-Alkali-Elektrolyse (Trockenherstellungsverfahren) hergestellt.

Die GDE wurde dabei speziell wie folgt hergestellt:
Eine Mischung bestehend aus PTFE Typ TF 2053Z der Fa. Dyneon, mit einem Anteil von 40 Gew.-% und 60 Gew.-% Kohlenstoff (Leitruß), Typ Vulcan Ruß XC72 der Fa. Cabot wurden bei einer Temperatur im Mittel von 38,8°C mit einer IKA-Mühle in Intervallen von 6 * 15s gemischt. Die Pulvermischung wurde auf 20°C abgekühlt und auf ein vergoldetes Nickel-Netz mit einer Drahtdicke von 0,14 mm und einer Maschenweite von 0,5 mm aufgestreut, so dass ein Pulverschicht von 4 mm entstand. Die Pulverschicht wurde anschließend mit einer Walze bei einer Linienkraft von 0,46 kN/cm verpresst. Anschließend wurde die Elektrode bei 340°C für 2 h getempert. Die entstandene Elektrode hatte eine Dicke von 0,60 mm.

Es wurden 1500 mL Abwasser 2 eingesetzt. Damit konnte die Vorlage 3 sowie der Elektrolytkreislauf 15, 18 mit Pumpe 26 und der Elektrodenraum 5 gefüllt werden.

Als Pumpe 26 wurde Kreiselpumpe eingesetzt. Es wurde ein Elektrolytvolumenstrom von 10L/h eingestellt.
Sauerstoff mit einem Gehalt von mind. 99,5Vol% wurde über die Leitung 12 in den Gasraum 11 zugegeben, überschüssiger Sauerstoff über 13 wieder abgeführt. Der Sauerstoffvolumenstrom betrug 15 L/h.

An der Spannungsversorgung 19 wurde ein Strom von 5,1A eingestellt, dabei betrug die anfängliche Zellspannung 12V. Die Temperatur des Elektrolyten (Abwasser) in der Zelle betrug zu Beginn 24°C. Es wurden stündlich Proben genommen um den TOC Gehalt zu bestimmen.

Es konnten mit 25 Ah/L eine TOC Erniedrigung von 1120 mg TOC/L (Abwasser) erreicht werden.

Während des Versuchs wurde keine Schaumbildung beobachtet.

### Beispiel 3 (erfindungsgemäß - bifunktionelle GDE)

Die Durchführung des Versuches entsprach dem des Beispiels 2. Es wurde jedoch als Kathode 7 eine bifunktionelle Gasdiffusionselektrode eingesetzt, die wie folgt hergestellt wurde:
Eine Mischung bestehend aus PTFE Typ TF 2053Z (Hersteller Fa. Dyneon), mit einem Anteil von 20 Gew.-%, einem Mischoxid mit Perowskitstruktur der Formel La_{0,9}Sr_{0,1}MnO₃. aus dem oben in Beispiel 1 beschriebenen Herstellverfahren mit einem Anteil von 60 Gew.-%, sowie Kohlenstoff (Leitruß) der Fa. Timcal, Typ C65 mit 15 Gew.-% und Graphit der Fa. Timcal Type KS6 mit einem Anteil von 5 Gew.-% wurden bei einer Temperatur im Mittel von 48,5°C mit einer IKA-Mühle in Intervallen von 5 * 20s gemischt. Die Pulvermischung wurde auf 20°C abgekühlt und auf ein Nickel-Drahtnetz mit einer Drahtdicke von 0,14 mm und einer Maschenweite von 0,5 mm aufgestreut, so dass ein Pulverschicht von 4 mm entstand. Die Pulverschicht wurde anschließend mit einer Walze bei einer Linienkraft von 0,65 kN/cm verpresst. Die entstandene Elektrode hatte eine Dicke von 0,68 mm.

Die Elektroden 6 und 7 wurden mit einer Spannungsversorgung 19 umpolbar elektrisch verbunden.
An der Spannungsversorgung wurde ein Strom von 5 A eingestellt, dabei betrug die anfängliche Zellspannung 12 V. Die Temperatur des Elektrolyten in der Zelle betrug zu Beginn 24°C. Es wurden stündlich Proben genommen um den TOC Gehalt zu bestimmen.

Es konnten mit 25 Ah/kg eine TOC Erniedrigung von 1280 mg TOC /L (Abwasser) erreicht werden.

Nach einer eingebrachten Ladungsmenge von 25 Ah/kg wurden weiße Beläge auf der GDE 7 festgestellt. Die Elektrolyse wurde unterbrochen und die Elektrodenpolarität wurde umgekehrt. Für eine Zeit von 30 min wurde die Zelle im umgepolten Zustand betrieben. Nach einer Ladungsmenge von 1,7 Ah/L wurde die Elektrolyse erneut unterbrochen. Die weißen Beläge konnten nicht mehr festgestellt werden. Nach erneuter Umpolung konnten die Elektroden für die Abwasserreinigung mit gleicher Wirksamkeit weiter geführt werden.

Während des Versuchs wurden keine Schaumbildung und keine Blockade der Kathode beobachtet.

### Beispiel 4 (Verwendung einer H₂ entwickelnden Kathode und Schaumbildung, Vergleichsbeispiel)

Es wurde ein Versuch mit einer Vorrichtung wie in Beispiel 2 durchgeführt, jedoch wurde statt einer Gasdiffusionselektrode eine Elektrode eingesetzt, die Wasserstoff entwickelt.

Die Kathode wurde dabei wie folgt hergestellt:
Eine Dispersion wird aus folgenden Komponenten angesetzt:
- Acetylene Black Ruß mit einem Anteil von 4 Gew.-%
- PTFE Dispersion als ca. 60%ige Lösung mit einem Anteil von 4 Gew.-%
- Poly-Ox als 2%ige Lösung (Firma Univar GmbH) mit einem Anteil von 1 Gew.-%
- Triton X 100 mit einem Anteil von 1 Gew.-%
- Entsalztes Wasser mit einem Anteil von 90 Gew.-%

Diese Komponenten wurden mit Hilfe eines Dispergierers Ultra-Turrax gemischt.

Die gemischte Dispersion wurde durch Spachteln in 9 aufeinanderfolgenden Beschichtungsgängen auf einen elektrisch leitender Träger, ein Kohlenstoff-Vlies (Hersteller Fa. SGL Carbon) aufgebracht. Der beschichtete Träger wurde bei 120°C für 1 h getrocknet und anschließend bei einer Temperatur von ca. 340°C für 2,5 h gesintert.

Die Elektrode erzeugte Wasserstoff.

Der Versuch mit der Wasserstoff entwickelnden Elektrode musste aufgrund der starken Schaumbildung im Elektrodenraum 5 vorzeitig abgebrochen werden.

## Patentansprüche

1. Reinigungsvorrichtung (1) für die Reinigung von Abwasser (2) aus einem Tank (3) und/oder einer Sammeleinrichtung (3a) mindestens aufweisend eine Elektrolysezelle wenigstens umfassend einen Elektrodenraum (5) mit einer Anode (6), geeignet zur Erzeugung von Hydroxid-Radikalen, und einer Kathode (7) geeignet zur Reduktion von Sauerstoff, die als Gasdiffusionselektrode ausgebildet ist, eine, insbesondere absperrbare, Abwasser-Zuleitung (8) und eine, insbesondere absperrbare, Abwasser-Ableitung (9) für das gereinigte Abwasser (10), weiter umfassend einen Gasraum (11), der durch die Kathode (7) vom Elektrodenraum (5) getrennt ist, mindestens eine Zuleitung (12) und eine Ableitung (13) für ein sauerstoffhaltiges Gas, die mit dem Gasraum (11) verbunden sind, und elektrische Anschlüsse (19a) und (19b), die die Anode und die Kathode mit einer Gleichspannungsquelle (19) schaltbar verbinden.

2. Reinigungsvorrichtung gemäß Anspruch 1, **dadurch gekennzeichnet, dass** der Elektrodenraum (5) mit einem zusätzlichen Auslass (20) für Gase aus dem Elektrodenraum (5) und/oder der Tank (3) mit einem zusätzlichen Gasauslass (20a) versehen ist.

3. Reinigungsvorrichtung gemäß Anspruch 1 oder 2, **dadurch gekennzeichnet, dass** die Anode (6) eine Beschichtung mit Diamant, insbesondere eine Beschichtung aus mit Bor dotiertem Diamant aufweist.

4. Reinigungsvorrichtung gemäß einem der Ansprüche 1 bis 3, **dadurch gekennzeichnet, dass** die Zuleitung (15) des Abwassers am Elektrodenraum (5) unterhalb der Kathode (7) oder seitlich zur Kathode (7) im unteren Drittel des Elektrodenraums (5) angebracht ist.

5. Reinigungsvorrichtung gemäß einem der Ansprüche 1 bis 4, **dadurch gekennzeichnet, dass** der Abstand zwischen Anode (6) und Kathode (7) im Bereich von 1-10 mm beträgt.

6. Reinigungsvorrichtung gemäß einem der Ansprüche 1 bis 5, **dadurch gekennzeichnet, dass** die Kathode (7) einen Elektro-Katalysator zur Sauerstoffreduktion umfasst.

7. Reinigungsvorrichtung gemäß einem der Ansprüche 1 bis 6, **dadurch gekennzeichnet, dass** die Kathode (7) eine für die Wasserstoffperoxid-Herstellung geeignete, auf Kohlenstoffmaterial basierende Gasdiffusionselektrode ist, insbesondere mit mindestens einem Kohlenstoffmaterial ausgewählt aus der Reihe: Kohlenstoff-Nanoröhrchen, Ruß, Graphit, Glaskohlenstoff.

8. Reinigungsvorrichtung gemäß Anspruch 7, **dadurch gekennzeichnet, dass** die Kathode (7) feinkörniges Kohlenstoffmaterial, insbesondere mit einem mittleren Korndurchmesser von 1 bis 60 Mikrometer ist und in Mischung mit einer polymeren hydrophilen Komponente, insbesondere einem Fluorpolymer, besonders bevorzugt PTFE, vorliegt und auf einem mechanischen, vorzugsweise elektrisch leitendenden Träger (16) aufgebracht ist.

9. Reinigungsvorrichtung gemäß einem der Ansprüche 1 bis 8, **dadurch gekennzeichnet dass** die Kathode (7) einen bifunktionalen Katalysator oder Mischkatalysator umfasst, der sowohl die Sauerstoff-Reduktion als auch die Sauerstoff-Oxidation katalysiert.

10. Reinigungsvorrichtung gemäß einem der Ansprüche 1 bis 9, **dadurch gekennzeichnet, dass** die Kathode (7) eine bifunktionelle Kathode ist, geeignet für die elektrochemische Sauerstoffreduktion und für die elektrochemische Sauerstoffproduktion, insbesondere eine bifunktionelle Kathode hergestellt auf Basis eines Mischoxids mit Perowskitstruktur, mit einer polymeren hydrophilen Komponente, insbesondere einem Fluorpolymer, besonders bevorzugt PTFE und einem Kohlenstoffmaterial ausgewählt aus der Reihe: Kohlenstoff-Nanoröhrchen, Ruß, Graphit, Glaskohlenstoff.

11. Reinigungsvorrichtung gemäß einem der Ansprüche 1 bis 10, **dadurch gekennzeichnet, dass** die Abwasserzuleitung (8) die Elektrolysezelle mit einem Abwassertank (3) und/oder einer Abwassersammeleinrichtung (3a) verbindet.

12. Reinigungsvorrichtung gemäß einem der Ansprüche 1 bis 11, **dadurch gekennzeichnet, dass** die Elektrolysezelle über eine Abwasser-Ableitung (9) mit einem Tank (17) für die Aufnahme von gereinigtem Wasser verbunden ist.

13. Reinigungsvorrichtung gemäß einem der Ansprüche 1 bis 12, **dadurch gekennzeichnet, dass** die Elektrolysezelle eine absperrbare Kreislauf-Leitung (18) aufweist, die insbesondere mit der Abwasserableitung (9) und der Abwasserzuleitung (8) verbunden ist.

14. Reinigungsvorrichtung gemäß einem der Ansprüche 1 bis 13, **dadurch gekennzeichnet, dass** die Anode (6) und die Kathode (7) umpolbar mit einer Gleichspannungsquelle (19) elektrisch verbunden sind.

15. Reinigungsvorrichtung gemäß einem der Ansprüche 1 bis 14, **dadurch gekennzeichnet, dass** die Reinigungsvorrichtung mit wenigstens einer Überwachungseinheit zur Überwachung einer oder mehrere der Messgrößen aus der Reihe: Elektrolyse-Strom und/oder Elektrolysespannung, Füllstand der Tanks (3) und (17), Volumenstrom des Abwassers (2), pH-Wert des Abwassers (2) und Reinigungsgrad des gereinigten Abwassers (10) versehen ist.

16. Verfahren zur elektrochemischen Reinigung von mit organischen Stoffen und gegebenenfalls zusätzlich mit anorganischen Stoffen verunreinigtem Abwasser unter Verwendung einer Reinigungsvorrichtung gemäß einem der Ansprüche 1 bis 15, **dadurch gekennzeichnet, dass** Abwasser (2) aus einem Tank (3) und/oder einer Sammeleinrichtung (3a) über die Abwasser-Zuleitung (8) in den Elektrodenraum (5) der Elektrolysezelle (22) kontinuierlich oder diskontinuierlich, bevorzugt diskontinuierlich eingeleitet wird, durch Anlegen einer elektrischen Spannung zwischen Anode (6) zur Erzeugung von Hydroxid-Radikalen und Kathode (7) zur Erzeugung von Hydroxidionen und ggf. zusätzlich Wasserstoffperoxid behandelt und gereinigt wird und über die Abwasser-Ableitung (9) abgeleitet wird.

17. Verfahren gemäß Anspruch 16, **dadurch gekennzeichnet, dass** das Abwasser (2) in den Elektrodenraum (5) ein-oder mehrfach rezirkuliert wird, insbesondere bis zur Erreichung eines vorbestimmten Reinigungsgrades und insbesondere bevorzugt in einem geschlossenen Kreislauf rezirkuliert wird.

18. Verfahren gemäß einem der Ansprüche 16 oder 17, **dadurch gekennzeichnet, dass** das Abwasser (2) den Elektrodenraum (5) in turbulenter Strömung, insbesondere in einer Strömung mit einer Reynold-Zahl Re > 2300, durchströmt.

19. Verfahren gemäß einem der Ansprüche 16 bis 18, **dadurch gekennzeichnet, dass** die Verweilzeit des Abwassers (2) im Elektrodenraum (5) von 0,1 bis 15 Sekunden beträgt.

20. Verfahren gemäß einem der Ansprüche 16 bis 19, **dadurch gekennzeichnet, dass** beim Betrieb der Elektrolysezelle (4) die Anode (6) und Kathode (7) in Intervallen elektrisch umgepolt werden.

21. Verfahren gemäß einem der Ansprüche 16 bis 20, **dadurch gekennzeichnet dass** die Taktzeit für den Betrieb der Kathode im Sauerstoff-Reduktionsmodus 10 Ah/L bis 120 Ah/L und im Sauerstoff-Entwicklungsmodus von 0,01 Ah/L bis 10 Ah/L beträgt,

22. Verfahren gemäß einem der Ansprüche 17 bis 21, **dadurch gekennzeichnet dass** wobei die Stromdichte im Sauerstoff-Reduktionsmodus Modus 100 bis 6000 A/m² beträgt und im Sauerstoff-Entwicklungsmodus 50 bis 4000 A/m² beträgt.

23. Verfahren gemäß einem der Ansprüche 16 bis 21, **dadurch gekennzeichnet, dass** je Milligramm organische Verunreinigung bestimmt als TOC eine Ladungsmenge von 0,01 Ah / mg TOC bis 5 Ah / mg TOC eingebracht wird.

24. Verwendung der Reinigungsvorrichtung nach einem der Ansprüche 1 bis 15 zur Reinigung von Abwasser in Fahrzeugen, insbesondere in Zügen, Reisebussen und Wohnmobilen, in Flugzeugen und Schiffen, oder insbesondere in mobilen Toiletten, sowie in landwirtschaftlichen Produktionsstätten, Ferienhäusern, Schwimmbädern, insbesondere in Krankenhäusern, Alten- und Pflegeheimen, bevorzugt zur sicheren Entfernung von Medikamentenresten oder Metaboliten von Hormonen, Schmerzmitteln, Röntgenkontrastmitteln, Zytostatika oder Antibiotika aus dem Abwasser.
